# DEMANDE DE BREVET EUROPEEN

(11) **EP 1 702 871 A1**
(43) Date de publication de la demande: **20.09.2006**
(21) Numéro de dépôt: 06290393.5
(22) Date de dépôt: 09.03.2006
(51) Int. Cl.: B65G 69/18, B65B 1/04, B65B 1/28, B01L 3/00, B65D 90/54, B65D 85/84

(54) **Conteneur souple à élément de guidage incorporé**

(30) Priorité: 15.03.2005 FR 0502547
(71) Demandeur: Isolateur Dénominateur Commun, 65100 Lourdes (FR)
(72) Inventeur: Saint-Martin, Bernard, 92120 Montouge (FR); Armau, Stéphanie, 65390 Ossun (FR)
(74) Mandataire: Santarelli

(57) **Abrégé**

Un conteneur pour le transfert d'un produit sous protection croisée, comportant une partie souple raccordée à une ouverture munie d'une bride dans laquelle est montée une porte qui est mobile entre une position d'obturation et au moins une position d'ouverture, est caractérisé en ce qu'il comporte un élément de guidage 15 adapté à amener une portion interne de la paroi de cette poche en saillie au travers de la bride 11A, ou à rétracter cette portion à l'intérieur du conteneur. Un tel conteneur permet un transfert de poudre, de matériau granulaire ou de petits objets, notamment, à partir du fond de ce conteneur ou à partir d'un autre conteneur.

## Description

L'invention concerne un conteneur dont au moins une partie est souple et qui est adapté au transfert de produits contaminants, , produits stériles, ou stériles et toxiques, sous protection croisée (c'est-à-dire qu'on protège le produit de toute contamination extérieure et qu'en même temps, on protège l'opérateur vis-à-vis de ce produit). Elle concerne notamment un conteneur souple ou en partie souple, en pratique à usage unique pour applications stériles, adapté à être en particulier utilisé pour des transferts de poudre.

On connaît, d'après le document FR - 2 721 289 (ou EP - 0 688 020, ou US - 5 853 207), un dispositif de jonction étanche entre deux enceintes isolées d'un milieu extérieur ainsi qu'une enceinte à usage unique adaptée à être mise en oeuvre dans un tel dispositif. Une telle enceinte à usage unique est en principe mobile, tandis que l'autre enceinte peut être une enceinte plus grande et plus lourde, par exemple une enceinte de stérilisation ou un réacteur. Ces enceintes sont chacune munies d'une ouverture munie d'une bride normalement obturée par une porte, et la jonction étanche entre ces enceintes met en oeuvre la manoeuvre conjointe des deux portes.

Pour des raisons pratiques, ces enceintes à usage unique, aussi appelées conteneurs à usage unique, sont généralement constituées de la combinaison d'une porte (ou couvercle) rigide et d'une poche (ou sac) en matière plastique souple, le plus souvent transparente. De tels conteneurs à usage unique peuvent servir à transférer toutes sortes de produits, liquides, solides ou pulvérulents, vers des enceintes plus massives (voire à partir de celles-ci).

Ce type de conteneurs est toutefois apparu avoir l'inconvénient de conduire à l'apparition d'un « anneau de risque ». En effet, pour que la porte du conteneur à usage unique puisse passer au travers de l'ouverture de l'autre enceinte (lors de son mouvement conjoint avec la porte de l'enceinte), il est nécessaire que son diamètre soit plus petit que celui de la porte de cette autre enceinte (dans le cas contraire, il y aurait un risque de coincement de cette porte dans l'ouverture de cette autre enceinte). Mais cette différence de diamètre laisse apparaître, sur la porte la plus grande, un anneau, plus ou moins large (cela dépend de la différence des diamètres), pouvant être exposé aussi bien à l'environnement extérieur qu'à l'environnement interne au système formé par le conteneur à usage unique et l'enceinte plus grande, ce qui nuit à la stricte séparation des environnements interne et externe que l'on veut dans des applications stériles.

Un tel anneau de risque se révèle particulièrement gênant lorsqu'on utilise un tel système pour transférer des produits pulvérulents, surtout dans le cas de poudres de faible densité. En effet, chaque traversée des ouvertures par ces produits est susceptible, si des précautions suffisantes ne sont pas prises, de générer un nuage de poudre qui peut ensuite se déposer (en partie) sur cet anneau de risque, et donc le contaminer (et ainsi casser la stérilité de l'ambiance interne si celle-ci est stérile). En outre, après plusieurs transferts, le dépôt de poudre peut devenir suffisamment épais pour obérer la qualité de l'étanchéité de la connexion des surfaces en regard des couvercles, et contaminer l'extérieur du système.

Une première solution à ce problème a été proposée par la Déposante dans le document FR - 2 782 071, qui décrit un conteneur à usage unique dont la porte est elle-même ensachetée de façon étanche avant la mise en service. Il est rappelé ici que, dans le contexte d'une application stérile, la notion d'étanchéité signifie principalement qu'il n'y a pas de passage de micro-organismes depuis l'intérieur vers l'extérieur, et réciproquement. De manière préférée, le conteneur à usage unique comporte un manchon de diamètre plus petit que celui de la porte de l'enceinte la plus grande, raccordé à une partie plus large du conteneur. Cela permet de guider de la poudre vers l'intérieur de cette autre enceinte, au-delà de l'anneau de risque (et donc minimiser les risques associés à cet anneau), à condition toutefois que l'opérateur puisse accéder au manchon, du côté interne de la grande enceinte, en sorte de faire pénétrer le manchon dans cette grande enceinte, à la manière d'une trompe. Un tel accès peut se faire au moyen de manchettes, dans le cas d'utilisateur d'un isolateur, ou par du personnel spécialement habillé dans le cas de plus grandes enceintes, par exemple constituées par des salles blanches à hottes du type FL (c'est-à-dire à Flux Laminaire) ou ZAC (c'est-à-dire des zones à environnement contrôlé).

Une autre solution a été proposés par la Déposante dans le document FR - 2 808 198 (ou US - 6 537 509), qui enseigne de prévoir un opercule mobile adapté à permettre la stérilisation de la porte de l'enceinte la plus grande, isolément, en pratique par de la vapeur, ce qui permet de nettoyer périodiquement l'anneau de risque. Mais cela n'empêche pas la formation de dépôt de poudre sur l'anneau de risque.

Un premier objet de l'invention est un conteneur souple (au moins en partie) adapté à transférer de la poudre sous protection croisée, en minimisant les risques de dépôt de poudre sur la surface externe d'une porte d'une grande enceinte à laquelle ce conteneur peut être connecté pour y déverser de la poudre, surtout lorsque celle-ci est légère, sans avoir à accéder à une partie de ce conteneur depuis l'intérieur de la grande enceinte.

Un autre objet de l'invention est un conteneur adapté à transférer dans une enceinte, sous protection croisée, notamment un produit contaminant ou un produit stérile mais toxique, en assurant un guidage de ce produit jusque dans l'enceinte sans avoir à accéder à ce conteneur depuis l'intérieur de l'enceinte.

L'invention propose à cet effet un conteneur pour le transfert d'un produit sous protection croisée, comportant une partie souple raccordée à une ouverture munie d'une bride dans laquelle est montée une porte qui est mobile entre une position d'obturation et au moins une position d'ouverture, caractérisé en ce qu'il comporte un élément de guidage adapté à amener une portion interne de la paroi de cette partie souple en saillie au travers de la bride, ou à rétracter cette portion à l'intérieur du conteneur.

Le conteneur peut être formé d'une poche souple mais peut en variante être un conteneur dont le fond rigide et dont seulement une partie proche de l'ouverture est souple. Il peut aussi, notamment, être un conteneur dont la partie proche de l'ouverture de connexion est souple, tandis que la partie opposée est un fond muni d'une ouverture formée par une porte et pouvant être raccordée à un autre conteneur, rigide ou non, contenant le produit à transférer, tel qu'un bidon métallique ou en verre.

En fait, la présence de cet élément de guidage répond aussi à un objectif de permettre que le déversement du contenu depuis le conteneur dans une enceinte puisse se faire transversalement à la verticale, ce qui explique que le conteneur de l'invention, tel que défini ci-dessus, ne se limite pas à un conteneur rempli de poudre : il est tout à fait adapté au déversement de poudre, mais peut aussi servir au déversement transversal d'autre types de produits secs pouvant être déversés, par exemple des matériaux granulaires ou de petits objets, etc. que l'on veut déverser par une porte latérale de l'enceinte.

Le conteneur de l'invention permet également un déversement de produits liquides, soit qu'on veuille minimiser les risques d'éclaboussures, soit que l'on veuille un déversement latéral.

Selon des caractéristiques avantageuses de l'invention, éventuellement combinées :
- cet élément de guidage est un tube fendu en matériau rigide, grâce à quoi la section de cet élément tubulaire peut varier par déformation élastique ; en variante, cet élément tubulaire peut être réalisé en un matériau plus souple, mais peut se révéler moins aisé à manipuler depuis l'extérieur du conteneur qu'un élément en matériau rigide,
- cet élément de guidage est un élément tubulaire adapté à prendre au moins temporairement une forme tronconique avec un bord avant adapté à venir en saillie en dehors du conteneur et un bord arrière longeant intérieurement la paroi latérale de la poche ; cette forme tronconique a de préférence un demi-angle au sommet compris entre 1° et 10°, ce qui correspond à une conicité suffisante pour obtenir un effet d'entonnoir, tout en permettant les mouvements nécessaires pour la venue en saillie en dehors du conteneur,
- selon une forme de réalisation, cet élément tubulaire est enfermé dans une gaine dont une zone, disposée à l'opposé de la bride par rapport à la bride, est rapportée à la paroi latérale de la poche et dont la partie interne constitue la portion adaptée à venir en saillie ; pour des raisons de compatibilité et de continuité, la gaine est avantageusement réalisée en un matériau identique à celui de la paroi latérale de la poche,
- selon une autre forme de réalisation, cet élément tubulaire est engagé dans un repli de la paroi latérale de la poche dont le fond est orienté vers la bride ; de manière préférée, ce repli dans lequel l'élément tubulaire est engagé est fermé, à l'opposé de la bride par rapport à l'élément tubulaire, en sorte d'enfermer l'élément tubulaire dans ce repli ; plus précisément, ce repli est avantageusement fermé par une ligne circonférentielle de soudage ; toutefois, en variante, ce repli est formé dans un conteneur classique, dans lequel on engage un tube au moment du déversement du contenu dans une enceinte,
- selon encore une autre forme de réalisation, cet élément de guidage peut n'être constitué que d'une portion de tube, ou être formé d'une pluralité d'éléments longitudinaux adaptés à pousser des portions internes de la paroi du conteneur dans l'enceinte.

L'invention a également pour objet un conteneur du type précité ayant ceci de particulier qu'il contient de la poudre.

Des objets, caractéristiques et avantages de l'invention ressortent de la description qui suit, donnée à titre d'exemple illustratif non limitatif, en regard des dessins annexés sur lesquels :
- la figure 1 est un schéma de principe représentant un conteneur souple classique, contenant de la poudre, sur le point d'être connecté à l'ouverture d'une enceinte dans laquelle on veut déverser la poudre de ce conteneur,
- la figure 2 est un schéma de principe représentant le déversement de la poudre depuis ce conteneur souple classique dans cette enceinte,
- la figure 3 est un schéma de principe représentant un conteneur souple conforme à l'invention sur le point d'être connecté à l'ouverture d'une enceinte pour y déverser de la poudre contenue dans ce conteneur,
- la figure 4 est un schéma de principe représentant le déversement de la poudre depuis ce conteneur souple conforme à l'invention dans cette enceinte,
- la figure 5 est un schéma de principe d'une étape intermédiaire de fabrication d'un conteneur souple conforme à l'invention selon un premier mode de réalisation,
- la figure 6 est un schéma de principe représentant ce conteneur souple après connexion à une enceinte,
- la figure 7 est un schéma de principe d'une étape intermédiaire de fabrication d'un autre conteneur souple conforme à l'invention, selon un second mode de réalisation de l'invention, et
- la figure 9 est un schéma de principe représentant la préparation d'un conteneur souple classique, connecté à une enceinte, en vue de le transformer en un conteneur souple conforme à l'invention.

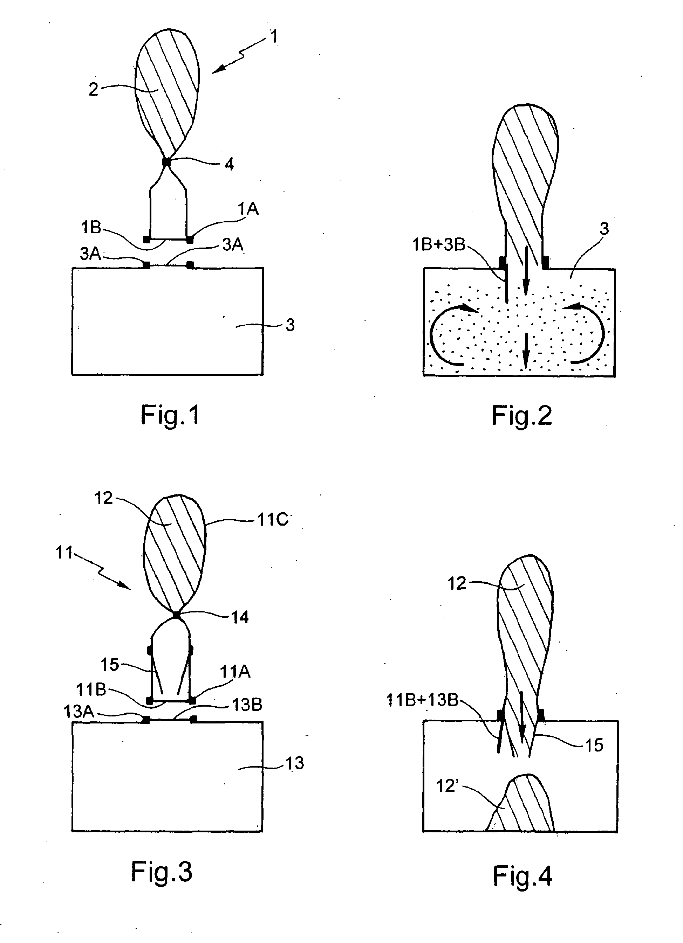

Les figures 1 et 2 correspondent à une configuration classique, dans laquelle un conteneur souple classique 1 contient de la poudre 2 que l'on veut déverser dans une enceinte 3, par exemple un réacteur. Cette enceinte 1 est ici représentée de manière très simplifiée, mais est avantageusement d'un type décrit dans les documents mentionnés ci-dessus. Il s'agit en principe d'un conteneur souple à usage unique comportant une poche souple dont une ouverture est bordée par une bride 1A dans laquelle est montée une porte 1B mobile entre une position d'obturation de cette bride, et donc de cette ouverture, et au moins une position d'ouverture permettant une communication de l'intérieur de ce conteneur avec l'intérieur d'une enceinte avec laquelle ce conteneur est momentanément connecté.

De même, l'enceinte 3 est représentée de manière très simplifiée, mais est avantageusement d'un type décrit dans les documents précités, avec une ouverture munie d'une bride 3A dans laquelle est montée une porte 3B mobile entre une position d'obturation de cette bride et au moins une position d'ouverture permettant une communication avec l'intérieur d'un conteneur lorsque celui-ci lui est connecté.

Comme indiqué dans les documents précités, la porte 3B de l'enceinte est avantageusement du type pivotant, vers l'intérieur de l'enceinte, tandis que la porte 1B du conteneur souple est avantageusement du type pivotant, vers l'extérieur, et ces portes sont destinées à être accolées l'une à l'autre, de manière étanche, avant de passer dans leurs positions respectives d'ouverture, en sorte de minimiser une contamination par l'environnement de ces surfaces ainsi isolées (ou, inversement, pour minimiser une contamination de l'environnement depuis ces surfaces) ; mais il a été expliqué ci-dessus qu'il subsiste en pratique un anneau de risque.

A la figure 1, les deux portes 1 B et 3B obturent de manière étanche leurs brides respectives 1A et 3A. Un élément de pincement 4, de tout type connu approprié, est en principe prévu pour séparer le volume interne du conteneur en une partie remplie de poudre et une partie adjacente à la porte, ce qui permet de permettre un écoulement de poudre postérieurement à l'ouverture de la porte.

A la figure 2, les deux brides 1A et 3B sont reliées entre elles et les portes ont été conjointement pivotées vers l'intérieur de l'enceinte 1.

A la différence de ce qui se passe lorsqu'on vide une bouteille contenant un liquide, le déversement de la poudre depuis la poche souple du conteneur peut être accompagné d'une diminution du volume interne de cette poche souple, de sorte qu'il n'y a pas de phénomène significatif de remontée d'air, ce qui est favorable à un écoulement peu turbulent lors de la traversée de la bride du conteneur.

Par contre, l'écoulement de la poudre entre la bride de l'enceinte et la surface sur laquelle la poudre s'accumule est libre, ce qui est susceptible de générer des mouvements au sein de la masse de poudre en mouvement (schématisés par des flèches sur la figure 2), créant ainsi un nuage de poudre d'autant plus important que la poudre est légère, avec des risques de dépôt de cette poudre sur toutes les surfaces exposées à ce nuage, y compris les surfaces accessibles des portes, notamment l'anneau de risque défini ci-dessus.

Les figures 3 et 4 représentent une configuration de conteneur souple permettant de réduire très significativement ce phénomène de nuage et de dépôt intempestif de poudre.

Sur ces figures, les éléments similaires à ceux des figures 1 et 2 sont désignés par des références numériques qui se déduisent de celles de ces figures par addition du nombre 10.

C'est ainsi qu'à la figure 3, un conteneur 11 selon l'invention contient de la poudre 12 qu'il s'agit de déverser dans une enceinte 13, au travers d'ouvertures respectives bordées par des brides respectives 11A et 13A normalement obturées par des portes respectives 11B et 13B. Un élément de pincement 14 sert à isoler une partie 11C du conteneur qui est remplie par la poudre (ici sans vide résiduel) vis-à-vis de la bride.

Selon l'invention, le conteneur comporte en outre un élément de guidage 15 adapté à amener une portion de la surface interne du conteneur à l'intérieur de l'enceinte 13, en sorte de guider l'écoulement de poudre au plus près de la surface sur laquelle elle doit s'accumuler (en 12A). On comprend aisément à l'examen de la figure 4 que, plus le guidage est effectué à proximité de cette surface de réception, plus l'importance d'un éventuel nuage résultant de l'écoulement de la poudre est réduite.

Cet élément de guidage 15 a de préférence une forme d'entonnoir convergeant vers l'extérieur du conteneur, au travers de la bride, soit naturellement, soit en raison d'une déformation temporaire. La conicité de cet élément 15 n'a pas besoin d'être très importante puisqu'il suffit que cet élément soit, à son extrémité haute, capable d'être manipulé depuis l'extérieur du conteneur et de collecter toute la poudre, sur la totalité de la section du conteneur 11, tout en étant capable, en son extrémité basse, de traverser la bride de l'enceinte. Un autre but de cette conicité est de faciliter le mouvement de rabattement de la paroi latérale de la poche, entre la bride et cet élément de guidage, lors de la venue en saillie de ce dernier hors du conteneur. En principe, la partie la plus large de l'élément 15 reste en dehors de l'enceinte pour garantir qu'on puisse le ressortir de l'enceinte après le déversement de la totalité de la poudre. Cette conicité (permanente ou temporaire) - que l'on peut désigner sous le terme de demi-angle au sommet - est de préférence comprise entre 1 et 10 °, même si des valeurs plus importantes peuvent être prévues, selon les cas.

Cet élément de guidage peut être un tube (cylindrique ou conique) continu sur toute sa périphérie, avantageusement en un matériau souple.

Toutefois, de manière préférée, cet élément 15 est constitué d'un tube (cylindrique ou conique) en matériau rigide mais fendu en sorte de permettre que sa section puisse varier par déformation élastique. Cet élément peut en particulier être réalisé en matière plastique, telle qu'une bakélite.

Une fois les portes ouvertes, l'opérateur, profitant de la déformabilité de la paroi latérale du conteneur, au moins au-dessus de la bride, glisse l'élément de guidage à travers l'ouverture de l'enceinte, idéalement jusqu'à la surface de réception de la poudre, ou sinon au plus près de celle-ci (on comprendra aisément que la longueur de l'élément de guidage est notamment limitée par la longueur du conteneur et de la partie de celui-ci qui est remplie de poudre). Dans le cas où l'élément de guidage est un tube fendu, on comprendra qu'il suffit de serrer ce tube pour en diminuer la section et donc faciliter la pénétration dans l'ouverture de l'enceinte.

L'opérateur libère alors l'élément de pincement, de sorte que la poudre s'écoule en créant un petit tas sur la surface de réception selon un écoulement sensiblement régulier depuis l'emplacement initial de cette poudre dans le conteneur, lors de la traversée de l'ouverture de l'enceinte et tout au long de l'élément de guidage.

Au fur et à mesure que le tas se constitue et augmente, l'opérateur remonte l'élément de guidage en sorte de permettre la croissance continue de ce tas, tout en minimisant les risques de formation d'un nuage de poudre susceptible de se déposer ensuite de manière intempestive.

Une fois vide, l'élément de guidage est complètement extrait de l'enceinte, les portes sont refermées, et le conteneur est déconnecté. Ce conteneur est alors en pratique emporté, fermé de manière définitive et envoyé vers un incinérateur pour y être détruit, sans risque de contamination des opérateurs ou de l'environnement.

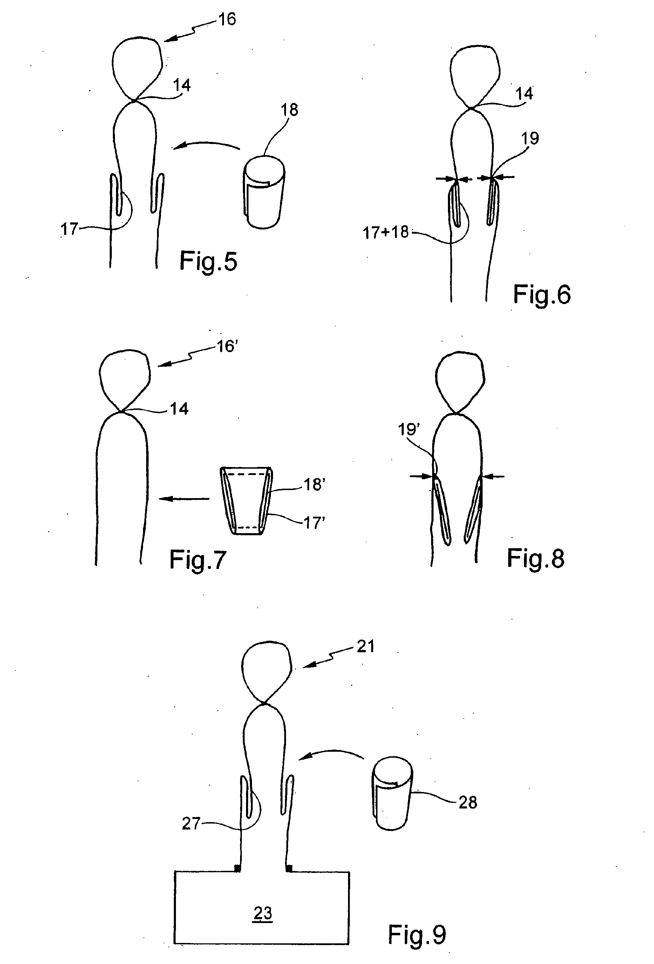

Les figures 5 à 9 représentent divers modes de réalisation d'un conteneur souple conforme à l'invention.

Plus précisément les figures 5 à 8 représentent deux modes de réalisation de conteneurs préalablement munis de l'élément de guidage, tandis que la figure 9 correspond à un cas où, au moment de s'en servir, on munit un conteneur classique d'un tel élément de guidage.

A la figure 5, une poche 16 destinée à faire partie d'un conteneur selon l'invention (il n'y a pas encore de bride ni de porte) est préparée puis est déformée de telle sorte que sa paroi latérale présente un repli 17 dont le fond est orienté vers la bride. Un tube fendu 18 est ensuite engagé dans ce repli depuis l'extérieur puis on soude les bords de ce repli, selon une ligne repérée 19 à la ligne 6, en sorte d'emprisonner le tube dans le repli (les flèches schématisent l'opération de soudage).

En variante, on part (figure 7) d'une poche 16', tandis qu'on prépare en parallèle un tube fendu 18' que l'on loge dans une gaine 17' qui l'entoure complètement, de manière étanche. Cette gaine est ensuite (figure 8) soudée à un niveau 19' approprié à l'intérieur de la paroi latérale de la poche 16'.

Pour une compatibilité et une continuité optimales entre la paroi latérale de la poche et la gaine, celles-ci sont avantageusement réalisées en un même matériau.

La figure 9 représente une configuration très similaire à celle de la figure 5, à ceci près que le conteneur 21 est déjà complet (avec sa bride et sa porte) et est connecté à une enceinte 23. Par analogie à ce qui précède à propos de cette figure 5, on déforme ce conteneur souple de telle sorte que sa paroi latérale présente un repli 27 dont le fond est orienté vers la bride et dans lequel on engage un tube fendu 28. Toutefois, puisque cette mise en place se fait immédiatement avant l'ouverture des portes et le déversement de la poudre, et que le conteneur est à usage unique, il n'est pas nécessaire de réaliser une soudure pour maintenir en place le tube dans le repli. On comprendra aisément que cette configuration de la figure 9 peut se révéler moins pratique que celle des figures 5 et 6, ou 7 et 8, mais a l'avantage de permettre d'utiliser des conteneurs classiques en les adaptant au moment de les utiliser. Elle permet en outre d'utiliser des éléments de guidage pouvant être plus longs que ne le permettent les dimensions du conteneur lorsqu'il est rempli par la poudre.

Il est à souligner que l'opérateur n'a aucune validation à faire, ni à la réception de conteneurs du type des figures 5 à 8, ou après adaptation d'un conteneur classique conformément à la figure 9, puisque l'élément de guidage formant entonnoir n'a aucun contact direct avec le contenu de la poche. Le fait d'ajouter cet élément de guidage ne change donc rien aux performances d'isolation de l'intérieur de la poche.

Des tests ont été effectués avec du lactose et ont permis d'attester de l'efficacité d'un tel élément de guidage pour provoquer un écoulement régulier de cette lactose, sans chute libre conduisant à la formation d'un nuage, sans que celui-ci vienne en contact avec le lactose, et sans qu'il ait fallu intervenir depuis l'intérieur de l'enceinte.

Il peut être noté que, dans ce qui précède, l'enceinte dans laquelle de la poudre est à déverser depuis un conteneur souple est supposée comporter une porte ouvrant vers le haut, de manière à ce que le déversement de la poudre puisse se faire par simple gravité. On comprendra toutefois que des conteneurs souples conformes à l'invention sont également utilisables avec à des enceintes dont la porte a une direction de pénétration inclinée par rapport à la verticale d'un angle inférieur à 90°, de manière à profiter de la gravité en combinaison avec un effet transversale de guidage assuré par l'élément de guidage. Puisque, ainsi, on peut prévoir d'introduire de la poudre par une ouverture de l'enceinte qui n'est pas à la verticale de la surface de réception de poudre, un avantage de l'invention est de contribuer à réduire les contraintes d'emplacement des ouvertures des enceintes.

En variante non représentée, le contenu de la partie supérieure du conteneur représenté sur les figures peut être un autre matériau sec, par exemple un matériau granulaire ou de petits objets, voire un matériau liquide.

Par ailleurs, selon une autre variante non représentée, au lieu d'être entièrement souple, le conteneur peut avoir un fond rigide (contenant le produit à déverser), ou être un manchon comportant une portion de connexion temporaire à un autre conteneur qui est rigide (voire souple lui aussi).

L'invention qui vient d'être décrite se place dans le cadre général d'une protection croisée.

En pratique, les conteneurs utilisés ont généralement un volume de un à cinquante litres, des demandes d'utilisateurs pour des volumes plus grands étant plus rares (des demandes pour des volumes allant jusqu'à cinq cents litres restant tout à fait exceptionnelles).

Le produit, lorsqu'il est en poudre, est souvent un produit actif ou un produit toxique et contaminant pour le personnel (d'où le besoin de protéger ce dernier). Aujourd'hui, on demande que de telles poudres soient aussi stériles. Le fait de les conditionner dans des conteneurs souples, de les stériliser en vrac par irradiation et enfin de les transférer stérilement permet de résister à toute contamination croisée.

## Revendications

1. Conteneur pour le transfert d'un produit sous protection croisée, comportant une partie souple raccordée à une ouverture munie d'une bride dans laquelle est montée une porte qui est mobile entre une position d'obturation et au moins une position d'ouverture, **caractérisé en ce qu'**il comporte un élément de guidage (15, 18, 18', 28) adapté à amener une portion interne de la paroi de cette partie souple en saillie au travers de la bride (11A), ou à rétracter cette portion à l'intérieur du conteneur.

2. Conteneur selon la revendication 1, **caractérisé en ce que** cet élément de guidage est un tube fendu en matériau rigide, grâce à quoi la section de cet élément tubulaire peut varier par déformation élastique.

3. Conteneur selon la revendication 1 ou la revendication 2, **caractérisé en ce que** cet élément de guidage est un élément tubulaire adapté à prendre au moins temporairement une forme tronconique avec un bord avant adapté à venir en saillie en dehors du conteneur et un bord arrière longeant intérieurement la paroi latérale de la poche.

4. Conteneur selon la revendication 3, **caractérisé en ce que** la forme tronconique a un demi-angle au sommet compris entre 1° et 10°.

5. Conteneur selon la revendication 3 ou la revendication 4, **caractérisé en ce que** cet élément tubulaire (18') est enfermé dans une gaine (17') dont une zone, disposée à l'opposé de la bride par rapport à la bride, est rapportée (19') à la paroi latérale de la poche et dont la partie interne constitue la portion adaptée à venir en saillie.

6. Conteneur selon la revendication 5, **caractérisé en ce que** la gaine est un matériau identique à celui de la paroi latérale de la poche.

7. Conteneur selon la revendication 3 ou la revendication 4, **caractérisé en ce que** cet élément tubulaire (18, 28) est engagé dans un repli (17, 27) de la paroi latérale de la poche dont le fond est orienté vers la bride.

8. Conteneur selon la revendication 7, **caractérisé en ce que** le repli (17) dans lequel l'élément tubulaire (18) est engagé est fermé, à l'opposé de la bride par rapport à l'élément tubulaire, en sorte d'enfermer l'élément tubulaire dans ce repli.

9. Conteneur selon la revendication 8, **caractérisé en ce que** le repli est fermé par une ligne circonférentielle de soudage.

10. Conteneur selon l'une quelconque des revendications 1 à 9, **caractérisé en ce que** ce conteneur est formé d'une poche souple.

11. Conteneur selon l'une quelconque des revendications 1 à 9, **caractérisé en ce que** ce conteneur a un fond rigide.

12. Conteneur selon l'une quelconque des revendications 1 à 9, **caractérisé en ce que** ce conteneur est un fond muni d'une ouverture fermée par une porte et pouvant être raccordé à un autre conteneur contenant le produit à transférer.

13. Conteneur selon l'une quelconque des revendications 1 à 12, **caractérisé en ce qu'**il contient de la poudre.
